(19) Europäisches Patentamt

European Patent Office

Office européen des brevets

(11) Publication number: **0 357 864 B1**

# EUROPEAN PATENT SPECIFICATION

(45) Date of publication of patent specification: **06.10.93**   (51) Int. Cl.⁵: **B01D 67/00**, B01D 71/56

(21) Application number: **89103490.2**

(22) Date of filing: **28.02.89**

(54) **Process for preparing reverse-osmosis membranes.**

(43) Date of publication of application:
**14.03.90 Bulletin 90/11**

(45) Publication of the grant of the patent:
**06.10.93 Bulletin 93/40**

(84) Designated Contracting States:
**DE FR IT NL**

(56) References cited:
**EP-A- 0 099 686
DE-B- 2 033 526
FR-A- 2 166 115
US-A- 4 129 559**

(73) Proprietor: **SEPAREM S.p.A.**
**Via per Oropa 118**
**I-13051 Biella (Vercelli)(IT)**

(72) Inventor: **Drioli, Enrico**
**153 Via A. Falcone**
**I-80127 Napoli(IT)**
Inventor: **Gaeta, Soccorso**
**8, Via Repubblica**
**I-13055 Occhieppo Inferiore Vercelli(IT)**
Inventor: **Sogliano, Marco**
**11, Vicolo Galeazzo**
**I-13051 Biella Vercelli(IT)**

(74) Representative: **Forattini, Amelia et al**
**c/o Internazionale Brevetti**
**Ingg. ZINI, MARANESI & C. S.r.l.**
**Piazza Castello 1**
**I-20121 Milano (IT)**

EP 0 357 864 B1

Rank Xerox (UK) Business Services
(3.10/3.6/3.3.1)

## Description

The present invention relates to a process for preparing reverse-osmosis membranes and to the membranes produced with said process. In particular, the field of the present invention relates to a process which is particularly suitable for forming planar membranes which are asymmetrical with respect to the plane which cuts the membrane halfway across its thickness. The field of the present invention furthermore relates to polypiperazinamide-based membranes, this term describing all polycondensation products of piperazine or of piperazine with alkyl substitutions in the nucleus, possibly in mixture with other diamines, with anhydrides or dichlorides of saturated or unsaturated, aromatic or heterocyclic aliphatic di-carboxylic acids, such as for example fumaric acid, mesaconic acid, adipic acid, phthalic acid, isophthalic acid, phthalic acids with substituted aromatic nucleus or heterocyclic acids derived from furan, thio-furan, pyridine, thiophene and the like, either alone or in mixture with one another. Polypiperazinamides belonging to the field of the present invention are described in the Italian patent application No. 22179 A/82 filed by Montedison S.p.A., corresponding to EP-A-0 099 686, related to the production of ultrafiltration and reverse-osmosis membranes.

In particular, the patent application No. 22179 A/82 discloses a procedure for manufacturing asymmetrical planar supported membranes based on polypiperazinamides, wherein the polypiperazinamide is dissolved in a polar organic solvent, the obtained solution is applied on a planar or tubular support, the body thus formed being then gelified by passing in a coagulation bath.

In practice, however, it has been observed that the process illustrated in the Italian patent application No. 22179 A/82 is not free from disadvantages; in particular planar membranes thus obtained have scarce mechanical resistance, which prevents or at least severely complicates the forming of coiled-spiral modules, so that the membranes can be used only in the planar or tubular form in which they were originally formed. This constitutes a limitation in practical use, since the forming of coiled-spiral modules is in itself particularly useful and practical for the final use of the membranes.

The aim of the present invention is therefore to eliminate the above described disadvantages by providing a polypiperazinamide-based asymmetrical planar membrane having a considerable mechanical resistance such as to allow the working of said planar membrane by folding to form coiled-spiral membrane modules, without the overall properties of the membrane suffering from any appreciable degradation.

An object of the invention is to form the membrane on a non-woven-fabric support in a planar configuration which can subsequently be folded to form coiled-spiral modules.

This aim, this object and others are achieved by the present invention, which is characterized in that it comprises the following succession of steps:

a) using a polypiperazinamide having an intrinsic viscosity at 20°C comprised between 2.0 and 2.9 dl/g in tetrachloroethane and preparing a solution of said polypiperazinamide in a polar organic solvent and filtering said solution with a filtering gauze with a mesh of less than 5 $\mu$m;

b) applying said solution on a planar support so as to form a planar body;

c) evaporating said solvent under the action of a forced air flow which has with respect to said planar support, such a speed as to produce Reynolds numbers comprised between 5 and 100;

d) gelifying said planar body by phase reversal by passing through a coagulation bath;

e) washing said membrane to extract the solvent contained therein.

The polypiperazinamide solutions are prepared, for example, in appropriately constructed and preset thermoagitators so that the temperature of the solution does not exceed 35°C and is not lower than 10°C. The step of preparing the solution sequentially comprises the loading of the solvent, the addition of approximately 50% of the polymer, the beginning of the agitation, and the successive gradual addition of the remaining polymer. The agitation time is preferably shorter than 10 hours.

The solution is filtered with a filtering gauze with a mesh of less than 5 $\mu$m and preferably of 2-3 $\mu$m and under a head of nitrogen. The filtering solution is allowed to degas until the gases it contains are eliminated. The filtration and degassing of the solution are fundamentally important for subsequently preparing membranes which are uniform, mechanically resistant and stable in the course of time.

The characteristics of the polymer must be such as to ensure an intrinsic viscosity at 20°C comprised between 2.0 e 2.9 dl/g in tetrachloroethane. The characteristics of intrinsic viscosity, and therefore of relative molecular mass, of the polymer are extremely important to prepare membranes which are mechanically resistant and adapted to produce coiled-spiral modules. The humidity content of the polymer is lower than 0.5%; this fact controls phase reversal kinetics and is important for preparing high-flow membranes. The solutions are prepared preferably using a polar organic solvent chosen in Class S of the classification of H.Burrel given in "Polymer Handbook", IV-341, J.Brandrup, E.N. Immergut, Editors, 1975, Interscience, N.Y. Said solvent is preferably formic acid. The concentration of the polymer in the polymeric solution thus obtained is preferably comprised between 16% and 19% by weight. The degassed solution is continuously applied in industrial quantities on a support of non-woven fabric in polyester or polypropylene with thickness comprised between 50 and 300 $\mu$m. The thickness of the film of solution applied on the support varies between 50 and 100 $\mu$m according to the characteristics of the required membranes. The membrane being formed travels for a certain distance in a controlled environment where the solvent partially evaporates. The evaporation time is comprised between 60 and 250 seconds; the application speed of the membrane varies between 0.3 m/min and 2 m/min; the temperature of the support is comprised between 15 and 28°C; the relative humidity of the evaporation region is preferably higher than 80%. The temperature of the air of the evaporation region is preferably comprised between 15 and 28°C. The flow of the air overlying the planar support of the membrane must be such as to produce speeds giving Reynolds numbers comprised between 5 and 100 and preferably comprised between 10 and 20. The Reynolds numbers are expressed by Re = cvd/u, where v is the relative speed of the air with respect to the planar body of the membrane being formed, c is the density, d is the equivalent diameter and [u] is the viscosity. After passing in the evaporation region, the membrane being formed is immersed in a coagulation bath, where the phase reversal is completed; said bath contains demineralized water with conductivity comprised between 5 and 20 microsiemens/cm at 20°C. The temperature of the coagulation bath is lower than 15°C, preferably lower than 5°C and more preferably lower than 3°C. The angle of immersion of the film being formed in the coagulation bath must be comprised between 80 and 90°. The immersion time is comprised between 15 minutes and 25 minutes. The pH of the bath is comprised between 2 and 4. The obtainment of mechanically resistant asymmetrical supported membranes with intermediate rejection according to the invention, so as to be usable for preparing coiled spiral modules, is controlled by the above described parameters and by the indicated values of the respective ranges of variability.

The membrane is washed with mains water or with basic solutions at a temperature higher than 15°C but lower than 50°C and preferably lower than 30°C continuously until the bath in which the manufactured membrane is immersed reaches a neutral pH. The membranes thus manufactured need no thermal treatment and their flow is comprised between 30 and 60 l/h•m$^2$ and their saline rejection is comprised between 30% and 95% (at 25°C, 2000 ppm of NaCl, 30 Atm); mechanical resistance is such as to be usable to prepare coiled-spiral modules; chemical resistance to contact with acids (up to pH = 1.5) and bases (up to pH = 12) is excellent; and resistance to oxidating agents and in particular to chloride (up to a concentration of 50 ppm) is optimum.

The obtained membrane has a thickness of less than 100 $\mu$m and preferably of more than 50 $\mu$m. The membrane has a dense surface layer and a spongy underlying layer, as illustrated in the accompanying photographs.

Example 1

Preparation of a reverse-osmosis membrane and related spiral module with saline rejection equal to 95%.

A 100-g polymeric solution is prepared with 82 g of formic acid (titer 99/100%) and 18 g of polymer Poly-Trans 2,5,dimethylpiperazinethiofurazanamide, characterized by an intrinsic viscosity in tetrachloroethane higher than 2.3 dl/g. The solution is agitated for 10 hours at 20°C and then filtered with an AISI 316 2-micron steel mesh and degassed in vacuum. The solution is applied on a support of non-woven polyester fabric at a speed of 0.3 m/min, at a temperature of 20°C, with a relative humidity of 80% in the solvent evaporation region, and such an air speed as to define fluidodynamic conditions characterized by a Reynolds number of 15. The thickness of the polymeric film is 100 $\mu$m. The coagulation bath is water, characterized by a conductivity of 20 microsiemens/cm at 20°C and by pH = 3. The temperature of the bath is 0.5°C and the time of permanence in the bath is 18 minutes. The formed membrane is washed for 5 minutes in water at 15°C and stored for 24 hours in demineralized water.

Five samples of the planar membrane are characterized with a planar-cell system fed by an aqueous solution of NaCl at 2000 ppm, at 25°C and 30 atm (3 MPa) and with a flow-rate of 400 lt/h. The results are listed in Table 1.

EP 0 357 864 B1

Table 1

| Flow and saline rejection values of the planar membranes of Example 1. | | | |
|---|---|---|---|
| membrane | flow (l/h•m²) | saline rejection (%) | test time (hours) |
| ST74E11 | 50 | 95 | 20 |
| ST74E12 | 39 | 95 | 20 |

A type 495T spiral module was coiled using the manufactured membrane and yielded the following values during characterization: flow 45 l/h•m², saline rejection 95%. Characterization was performed with an aqueous solution of NaCl at 2000 ppm, 25°C, 30 atm (3 MPa), axial flow rate = 2000 lt/h, pH = 6.7.

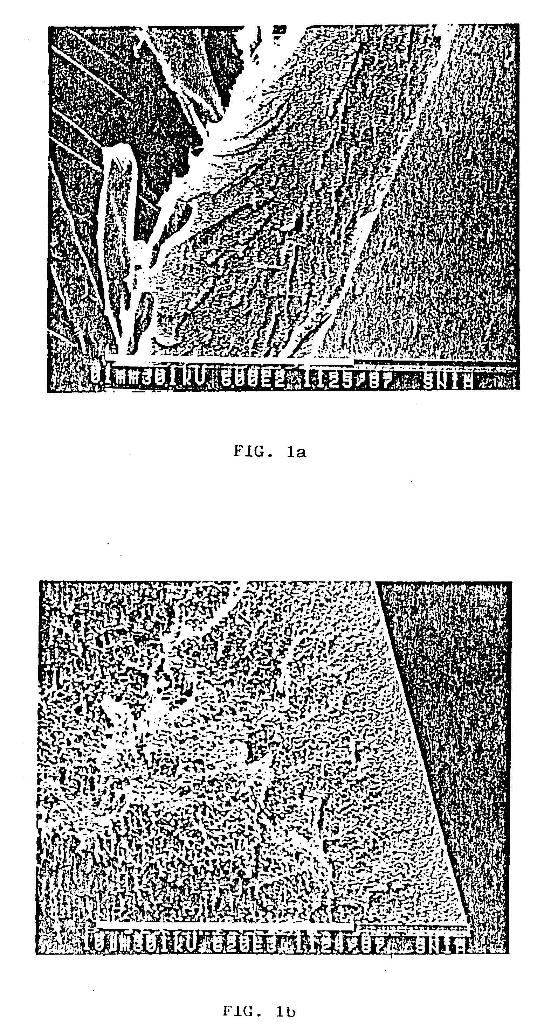

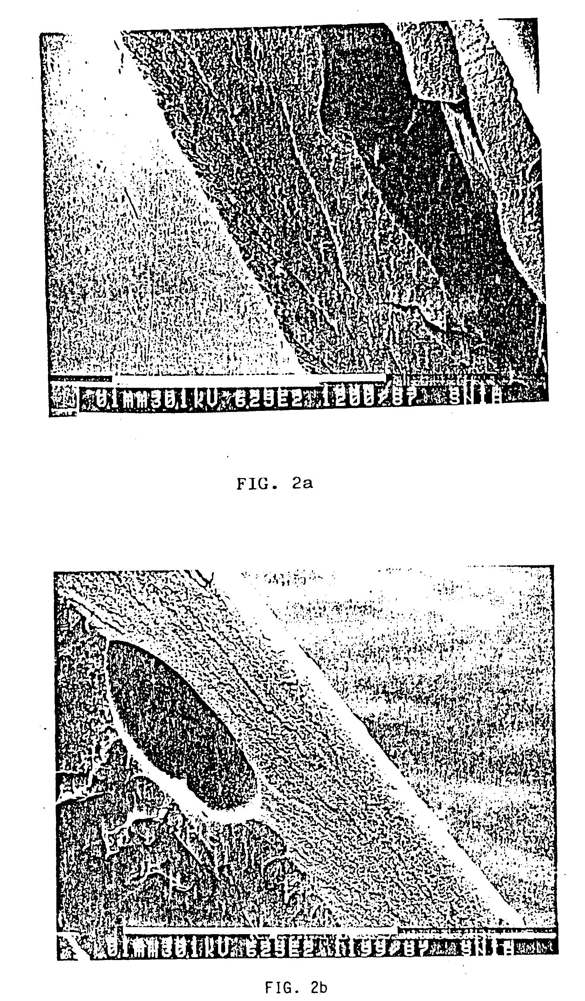

Microphotographs of the cross section of the membranes obtained are illustrated in figures 1a, 1b, 2a, 2b and 2c.

Example 2

Preparation of a reverse-osmosis membrane and of a related spiral module with 85% saline rejection.

A 100-g polymeric solution is prepared with 82 g of formic acid (titer 99/100%) and 18 g of polymer as in Example 1, except for the fact that the solution is applied with an application speed of 0.7 m/minute and an air speed corresponding to a Reynolds number of 13. The produced planar membrane is characterized as in Example 1 and the results are listed in Table 2.

Table 2

| Flow and saline rejection values of the planar membranes of Example 2. | | | |
|---|---|---|---|
| membrane | flow (l/h•m²) | saline rejection (%) | test time (hours) |
| ST74E6 | 42 | 85 | 20 |
| ST74E7 | 38 | 88 | 20 |

A type 470T spiral module was coiled with the produced membrane and yielded the following values during characterization in the conditions listed in Example 1: flow 40 l/h•m², saline rejection = 85%.

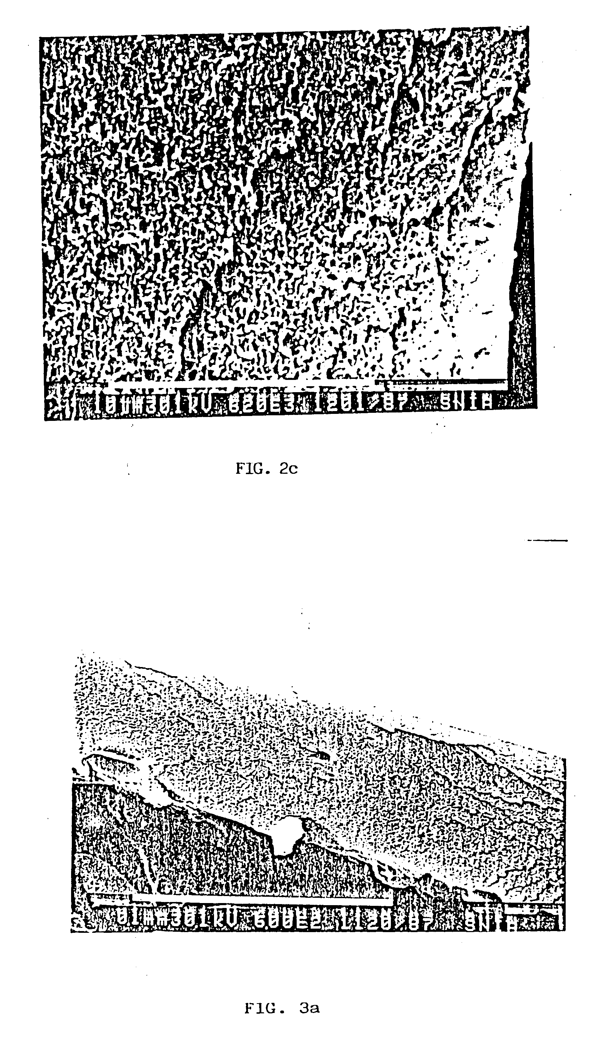

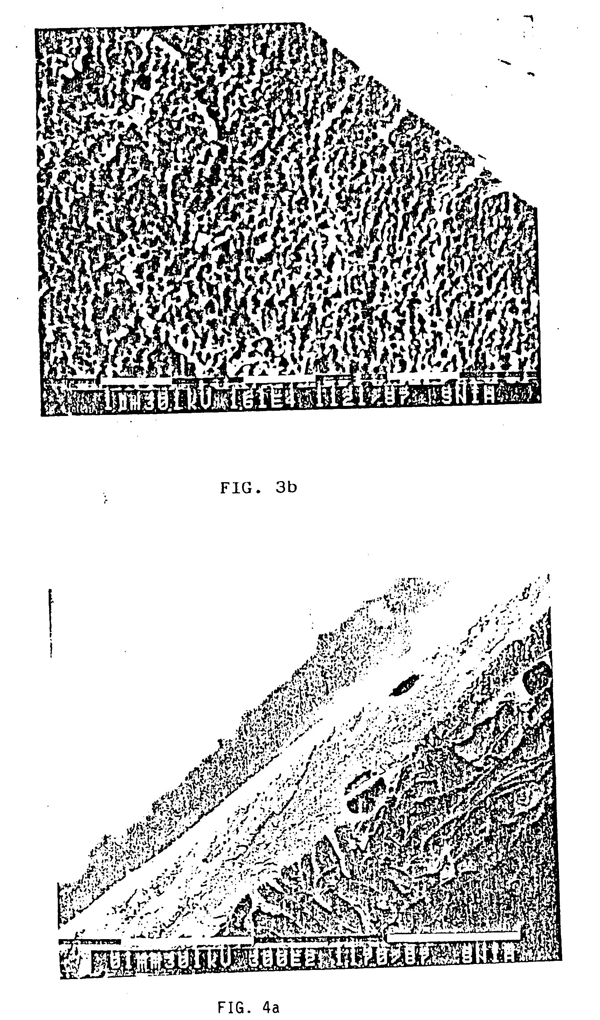

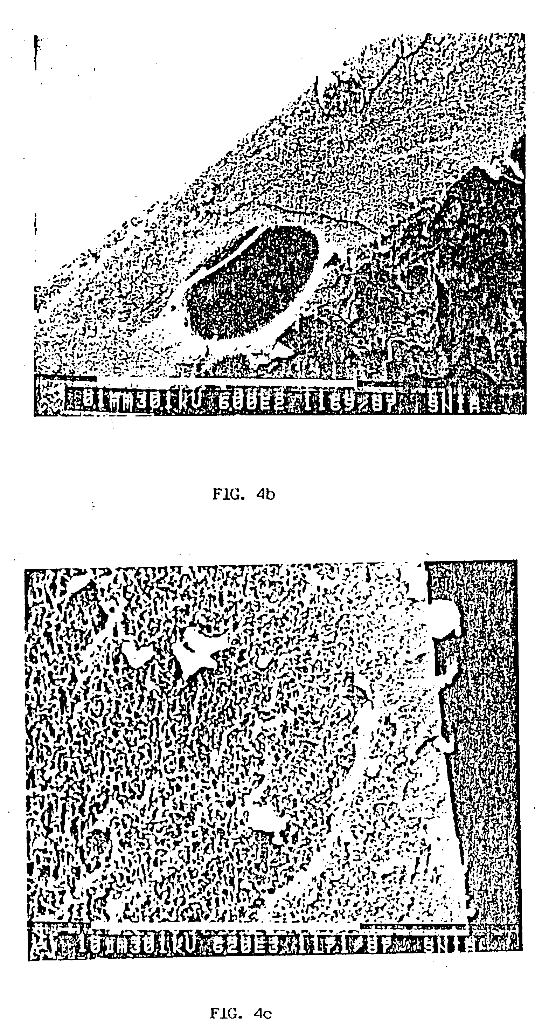

Microphotographs of the section of the produced membranes are illustrated in figures 3a, 3b, 4a, 4b and 4c.

Example 3

Preparation of a reverse-osmosis membrane and of the related spiral module with.a saline rejection of less than 55%.

The polymeric solution and the planar membrane are prepared as in Example 2 except for the fact that the application speed is equal to 1 m/minute and the Reynolds number is 20. The planar membrane is characterized as in Examples 1 and 2 and the results are listed in Table 3.

4

Table 3

| Flow and saline rejection value of the planar membranes of Example 3. | | | |
|---|---|---|---|
| membrane (hours) | flow (l/h•m$^2$) | saline rejection (%) | test time |
| SM 52 | 98 | 50 | 24 |
| SM 52 | 95 | 51 | 24 |
| SM 52 | 100 | 54 | 24 |
| SM 52 | 92 | 54 | 24 |
| SM 52 | 87 | 53 | 24 |
| SM 52 | 85 | 49.7 | 24 |

A type 400T spiral module was coiled using the produced membrane and yielded the following values during characterization at the conditions of Examples 1 and 2:
Flow = 90 l/h•m$^2$, saline rejection = 50%.

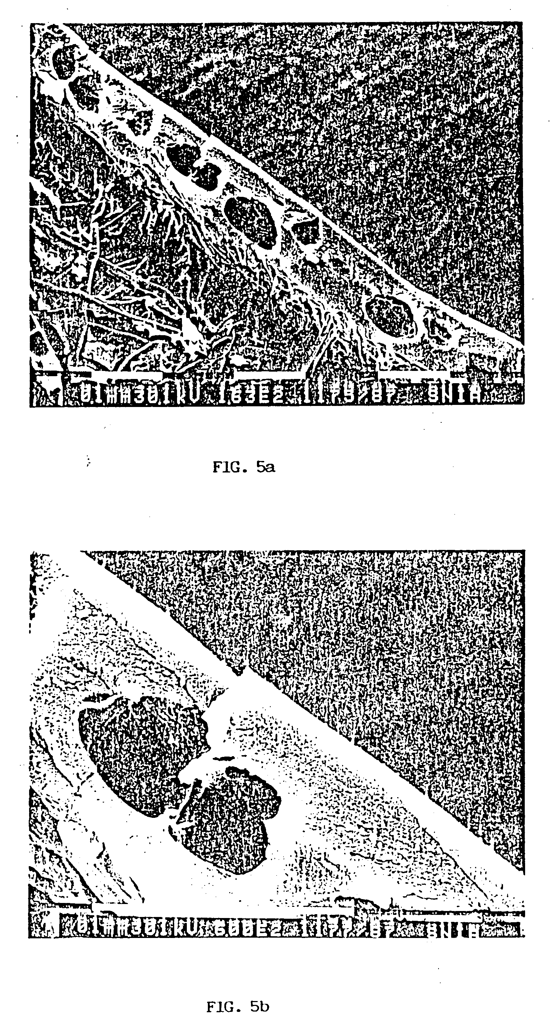

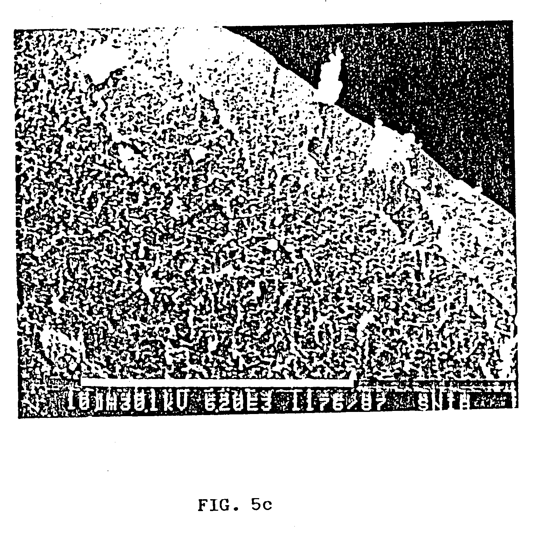

Microphotographs of the cross section of the produced membranes are illustrated in figures 5a, 5b and 5c.

Example 4

Preparation of a reverse-osmosis membrane and of the related spiral module: influence of evaporation temperature.

A polymeric solution and the planar membrane are prepared as in Example 1 except for the fact that the solvent evaporation temperature is 40°C. Then a comparison membrane is applied with an evaporation temperature of 15°C. The membrane is characterized as in Examples 1 and 2 and the results are listed in Table 4.

Table 4

| Flow and saline rejection values of the planar membranes of Example 4. | | | |
|---|---|---|---|
| membrane | flow (l/h•m$^2$) | saline rejection (%) | test time (hours) |
| SM 450A | 21.8 | 81.5 | 24 |
| SM 450B | 24.6 | 82.8 | 24 |
| T = 15°C | | | |
| SM 448A | 33 | 94.1 | 24 |
| SM 448B | 32 | 93.8 | 24 |
| SM 448C | 29 | 93.6 | 24 |
| SM 448M | 32 | 96.7 | 24 |
| SM 448E | 35 | 95 | 24 |

Two type 400T spiral modules were coiled using the produced membrane and yielded the following results during characterization at the conditions of Example 1:
with membrane T = 40°C: flow = 20 l/h•m$^2$; rejection 82%
with membrane T = 15°C: flow = 35 l/h•m$^2$; rejection 95%

Example 5

Influence of the filtration of the polymeric solution on the characteristics of the membrane and of the related modules.

The polymeric solution and the planar membrane are prepared as in Example 1 except for the fact that part of the solution is not filtered.

The membranes produced with filtered and non-filtered solution are characterized as in examples 1 and 2 and the results are listed in Table 5.

Table 5. Flow and saline rejection values of the planar membranes of Example 5

| membrane | flow $(1/h \cdot m^2)$ | saline rejection (%) | test time (hours) |
|---|---|---|---|
| filtered solution | | | |
| SM 323A | 85 | 87 | 24 |
| SM 323B | 73 | 91.2 | 24 |
| SM 323C | 79 | 91.2 | 24 |
| SM 323D | 57 | 92.3 | 24 |
| SM 323E | 69 | 90.6 | 24 |
| SM 323F | 76 | 91 | 24 |

| membrane | flow $(1/h \cdot m^2)$ | saline rejection (%) | test time (hours) |
|---|---|---|---|
| non-filtered solution | | | |
| SM 325A | 214 | 43.4 | 24 |
| SM 325B | 142 | 49.4 | 24 |
| SM 325C | 167 | 54 | 24 |
| SM 325D | 209 | 47 | 24 |
| SM 325E | 167 | 50.3 | 24 |
| SM 325F | 146 | 56.2 | 24 |

Two type 400T spiral modules were coiled using the produced membrane and yielded the following results during characterization in the conditions of Example 1:

| non-filtered solution | Flow 174 l/h$\cdot$m$^2$ | Rejection 50% |
|---|---|---|
| filtered solution | Flow 73 l/h$\cdot$m$^2$ | |

Example 6

Influence of the thickness of the planar membrane and of the viscosity of the polymer on the characteristics of the membranes and of the related modules.

The polymeric solution is prepared as in Example 1 except for the fact that the intrinsic viscosity of the polymer is equal to 1.33 dl/g. A planar membrane having a thickness of less than 50 $\mu$m and one with a thickness of 100 $\mu$m are prepared. The membranes obtained with the two thicknesses are characterized as in Example 1 and 2 and the results are listed in Table 6.

Table 6. Flow and saline rejection values of planar membranes of Example 6

| membrane | flow (1/h·m$^2$) | saline rejection (%) | test time (hours) |
|---|---|---|---|
| 50 $\mu$m thickness | | | |
| MS 11A 1 | 19 | 59 | 24 |
| MS 11B 1 | 12 | 64 | 24 |
| MS 11C 1 | 15 | 58 | 24 |
| MS 11D 1 | 18 | 56 | 24 |
| membrane | flow (1/h·m$^2$) | saline rejection (%) | test time (hours) |
| 100 $\mu$m thickness | | | |
| MS 11A 2 | 51 | 91.6 | 24 |
| MS 11B 2 | 49 | 92 | 24 |
| MS 11C 2 | 51 | 91.8 | 24 |
| MS 11D 2 | 56 | 90 | 24 |

Two type 400T spiral modules were coiled using the produced membrane and yielded the following results during characterization in the conditions of Examples 1 and 2 yielded the following results; as the membrane was furthermore produced with a polymer having viscosity = 1.33 dl/g, a comparison is made with a module produced with a membrane obtained in identical conditions but with polymer viscosity = 2.4 dl/g.

| Membrane | Viscosity | Flow l/h·m$^2$ | Rejection (%) |
|---|---|---|---|
| 50 $\mu$m | low | 26 | 49 |
| 100 $\mu$m | low | 60 | 81 |
| 100 $\mu$m | high | 36 | 94 |

7

## EP 0 357 864 B1

**Claims**

1. Process for preparing polypiperazinamide-based reverse-osmosis membranes characterized in that it comprises the following succession of steps:

   a) using a polypiperazinamide having an intrinsic viscosity at 20°C comprised between 2.0 and 2.9 dl/g in tetrachloroethane and preparing a solution of said polypiperazinamide in a polar organic solvent and filtering said solution with a filtering gauze with a mesh of less than 5 μm;

   b) applying said solution on a planar support so as to form a planar body;

   c) evaporating said solvent under the action of a forced air flow which has, with respect to said planar support, such a speed as to produce Reynolds numbers comprised between 5 and 100;

   d) gelifying said planar body by phase reversal by passing through a coagulation bath;

   e) washing said membrane to extract said solvent contained therein.

2. Process according to claim 1, characterized in that said forced air flow has, with respect to said planar support, such a speed as to produce Reynolds numbers comprised between 10 and 20.

3. Process according to claim 1, characterized in that said evaporation step is prolonged for a time period of more than 60 seconds and preferably less than 250 seconds.

4. Process according to claim 1, characterized in that said air flow has a temperature comprised between 15 and 28°C and a relative humidity higher than 80%.

5. Process according to claim 1, characterized in that said coagulation bath is essentially formed by water at a temperature of less than 15°C, preferably lower than 5°C, and more preferably lower than 3°C.

6. Process according to claim 5, characterized in that said water has conductivity values comprised between 5 and 20 microsiemens/cm at 20°C and a pH comprised between 2 and 4.

7. Process according to claim 1, characterized in that said polar organic solvent is chosen among solvents of Class S according to the classification of H. Burrel.

8. Process according to claim 7, characterized in that said polar organic solvent is formic acid.

9. Process according to claim 1, characterized in that the concentration of the polymer in the polymeric solution is comprised between 16% and 19% by weight, the solubilization temperature is comprised between 18 and 25°C, and the solubilization time is not longer than 10 hours.

10. Process according to claim 1, characterized in that the polymeric solution is completely degassed and filtered with steel gauze with a mesh of 2-3 μm.

11. Process according to claim 1, characterized in that the polymeric solution is continuously applied on a non- woven fabric, thus forming a supported asymmetrical membrane.

12. Process according to claim 1, characterized in that the application speed of the membrane is comprised between 0.3 and 2 m/min.

13. Process according to claim 1, characterized in that the newly formed membrane is continuously washed until the solvent is completely extracted from the polymeric film with water or basic solutions at a temperature comprised between 15 and 50°C and preferably comprised between 15 and 30°C.

14. Process according to claim 1, characterized in that the polymer has a humidity content of less than 0.5% by weight.

**Patentansprüche**

1. Verfahren zum Herstellen von Umkehrosmosemembranen auf Polypiperazinamidbasis, **dadurch gekennzeichnet**, daß es die folgende Abfolge von Schritten umfaßt:

8

a) Verwenden eines Polypiperazinamids mit einer inneren Viskosität bei 20°C zwischen 2,0 und 2,9 dl/g in Tetrachlorethan und Herstellen einer Lösung des Polypiperazinamids in einem polaren organischen Lösungsmittel und Filtern der Lösung mit einem Filtersiebgewebe mit einer Maschenweite von weniger als 5 $\mu$m;

b) Auftragen der Lösung auf einen ebenen Träger, um einen ebenen Körper zu bilden;

c) Verdampfen des Lösungsmittels durch die Wirkung eines Gebläseluftstroms, welcher bezogen auf den ebenen Träger eine solche Geschwindigkeit hat, daß er Reynoldszahlen zwischen 5 und 100 ergibt;

d) Gelieren des ebenen Körpers durch Phasenumkehr durch Hindurchleiten durch ein Koagulationsbad;

e) Waschen der Membran, um das darin enthaltene Lösungsmittel zu extrahieren.

2. Verfahren nach Anspruch 1, **dadurch gekennzeichnet**, daß der Gebläseluftstrom, bezogen auf den ebenen Träger, eine solche Geschwindigkeit hat, daß er Reynoldszahlen zwischen 10 und 20 ergibt.

3. Verfahren nach Anspruch 1, **dadurch gekennzeichnet**, daß der Verdampfungsschritt einen Zeitraum von mehr als 60 s und vorzugsweise weniger als 250 s einnimmt.

4. Verfahren nach Anspruch 1, **dadurch gekennzeichnet**, daß der Luftstrom eine Temperatur zwischen 15 und 28°C und eine relative Feuchtigkeit höher als 80% hat.

5. Verfahren nach Anspruch 1, **dadurch gekennzeichnet**, daß das Koagulationsbad im wesentlichen aus Wasser, bei einer Temperatur von weniger als 15°C, vorzugsweise niedriger als 5°C und noch mehr bevorzugt niedriger als 3°C, gebildet ist.

6. Verfahren nach Anspruch 5, **dadurch gekennzeichnet**, daß das Wasser spezifische Leitfähigkeitswerte zwischen 5 und 20 $\mu$S/cm bei 20°C und einen pH zwischen 2 und 4 hat.

7. Verfahren nach Anspruch 1, **dadurch gekennzeichnet**, daß das polare organische Lösungsmittel aus Lösungsmitteln der Klasse S nach der Klassifikation von H. Burrel gewählt wird.

8. Verfahren nach Anspruch 7, **dadurch gekennzeichnet**, daß das polare organische Lösungsmittel Ameisensäure ist.

9. Verfahren nach Anspruch 1, **dadurch gekennzeichnet**, daß die Konzentration des Polymers in der Polymerlösung zwischen 16 und 19 Gew.-% liegt, die Solubilisierungstemperatur zwischen 18 und 25°C liegt und die Solubilisierungszeit nicht länger als 10 h ist.

10. Verfahren nach Anspruch 1, **dadurch gekennzeichnet**, daß die Polymerlösung vollständig entgast und mit einem Stahlsiebgewebe mit einer Maschenweite von 2 bis 3 $\mu$m filtriert wird.

11. Verfahren nach Anspruch 1, **dadurch gekennzeichnet**, daß die Polymerlösung kontinuierlich auf ein Faservlies aufgetragen wird, wobei somit eine asymmetrische Membran auf einem Träger gebildet wird.

12. Verfahren nach Anspruch 1, **dadurch gekennzeichnet**, daß die Auftragungsgeschwindigkeit der Membran zwischen 0,3 und 2 m/min liegt.

13. Verfahren nach Anspruch 1, **dadurch gekennzeichnet**, daß die neu gebildete Membran kontinuierlich mit Wasser oder basischen Lösungen bei einer Temperatur zwischen 15 und 50°C und vorzugsweise zwischen 15 und 30°C gewaschen wird, bis das Lösungsmittel vollständig aus dem Polymerfilm extrahiert ist.

14. Verfahren nach Anspruch 1, **dadurch gekennzeichnet**, daß das Polymer einen Feuchtigkeitsgehalt von weniger als 0,5 Gew.-% hat.

**Revendications**

1. Procédé pour préparer des membranes d'osmose inverse à base de polypipérazinamide, caractérisé en ce qu'il comprend la succession suivante d'étapes :
   a) utilisation d'un polypipérazinamide ayant une viscosité intrinsèque à 20°C comprise entre 2,0 et 2,9 dl/g dans le tétrachloroéthane, préparation d'une solution dudit polypipérazinamide dans un solvant organique polaire et filtration de ladite solution avec une toile filtrante ayant une ouverture de maille inférieure à 5 $\mu$m ;
   b) application de ladite solution sur un support plan de façon à former un corps plan ;
   c) évaporation dudit solvant sous l'effet d'un courant d'air forcé gui a, relativement audit support plan, une vitesse telle qu'elle produise des nombres de Reynolds compris entre 5 et 100 ;
   d) gélification dudit corps plan par inversion de phase par passage à travers un bain de coagulation ; et
   e) lavage de ladite membrane pour extraire ledit solvant qui y est contenu.

2. Procédé selon la revendication 1, caractérisé en ce que ledit courant d'air forcé a, relativement audit support plan, une vitesse telle qu'elle produise des nombres de Reynolds compris entre 10 et 20.

3. Procédé selon la revendication 1, caractérisé en ce que ladite étape d'évaporation est poursuivie pendant une période supérieure à 60 secondes et de préférence inférieure à 250 secondes.

4. Procédé selon la revendication 1, caractérisé en ce que ledit courant d'air a une température comprise entre 15 et 28°C et une humidité relative supérieure à 80 %.

5. Procédé selon la revendication 1, caractérisé en ce que ledit bain coagulant est essentiellement formé d'eau à une température inférieure à 15°C, de préférence inférieure à 5°C et plus préférablement inférieure à 3°C.

6. Procédé selon la revendication 5, caractérisé en ce que ladite eau a des valeurs de la conductivité comprises entre 5 et 20 $\mu$S/cm à 20°C et un pH compris entre 2 et 4.

7. Procédé selon la revendication 1, caractérisé en ce que ledit solvant organique polaire est choisi parmi les solvants de la classe s selon la classification de H. Burrel.

8. Procédé selon la revendication 7, caractérisé en ce que ledit solvant organique polaire est l'acide formique.

9. Procédé selon la revendication 1, caractérisé en ce que la concentration du polymère dans la solution polymère est comprise entre 16 % et 19 % en poids, la température de solubilisation est comprise entre 18 et 25°C et le temps de solubilisation ne dépasse pas 10 heures.

10. Procédé selon la revendication 1, caractérisé en ce que la solution polymère est complètement dégazée et filtrée avec une toile d'acier ayant une ouverture de maille de 2 à 3 $\mu$m..

11. Procédé selon la revendication 1, caractérisé en ce que la solution polymère est appliquée en continu sur un non-tissé pour former ainsi une membrane asymétrique supportée.

12. Procédé selon la revendication 1, caractérisé en ce que la vitesse d'application de la membrane est comprise entre 0,3 et 2 m/min.

13. Procédé selon la revendication 1, caractérisé en ce que la membrane nouvellement formée est lavée en continu, jusqu'à ce que le solvant soit complètement extrait de la pellicule polymère, avec de l'eau ou des solutions basiques, à une température comprise entre 15 et 50°C et de préférence comprise entre 15 et 30°C.

14. Procédé selon la revendication 1, caractérisé en ce que le polymère a une teneur en humidité inférieure à 0,5 % en poids.

FIG. 1a

FIG. 1b

11

FIG. 2a

FIG. 2b

FIG. 2c

FIG. 3a

FIG. 3b

FIG. 4a

FIG. 4b

FIG. 4c

FIG. 5a

FIG. 5b

FIG. 5c